# EUROPEAN PATENT APPLICATION

(11) **EP 2 152 002 A1**
(43) Date of publication of application: **10.02.2010**
(21) Application number: 08254094.9
(22) Date of filing: 20.12.2008
(51) Int. Cl.: H04N 7/173

(54) **Supplying video data to mobile devices**

(30) Priority: 09.08.2008 GB 0814632
(71) Applicant: Saffron Digital Limited, London EC1N 8FH (GB)
(72) Inventor: Sedeffow, Peter Vassilev, London, E2 9NL (GB)
(74) Representative: Atkinson, Ralph

(57) **Abstract**

Video data is supplied from a plurality of video material suppliers (102, 103) to a plurality of mobile devices (107 - 109). Original video data is requested and received, and a data store (303) is arranged to store additional video data. A processing system (304) analyses original coding characteristics of the original video data received via said second interface (302) and selects additional video data from the data store (303). The additional video data is coded in accordance with said original coding characteristics to produce coded additional data and the coded additional data is combined with the original video data, to produce combined video output data.

## Description

The present invention relates to apparatus for supplying video data to mobile devices, of the type comprising a plurality of video material suppliers; a video processing station and a plurality of mobile devices configured to request video material from said suppliers via said video processing station.

The present invention also relates to a method of supplying video data to mobile devices of the type comprising the steps of receiving a request for video data, receiving original video data in a form compatible with operational characteristics of the requesting mobile device and relaying video data to the requesting mobile device.

Procedures for the downloading of video files displayable on mobile devices are described in the applicant's co-pending British patent application No 07 09 030.1 (US 12/113,403). When material of this type is downloaded a specific payment may be made for the material itself or, alternatively revenue may be generated from transmission charges.

Given the wide availability of video material on the Internet, many users of computer equipment have become used to obtaining video material without making a payment. It is also well known on the Internet for revenue to be generated from advertisements as an alternative to a direct payment being made. It is therefore considered desirable to provide similar techniques for mobile devices.

A problem with displaying advertisements on mobile devices is that they are generally only provided with a relatively small screen (particularly mobile cellular telephones) therefore it is usually possible to show a single image window whereas computer display screens may show several windows, allowing advertisements to be selected and transmitted in real-time. If an advertisement is to be included in a video clip, it may be shown before or after the clip, in a fashion substantially similar to advertisements being included with movies supplied on video tape or DVD etc. Thus, an editing exercise is necessary in which the advertisements are added to the existing video material for subsequent distribution. However, this introduces a further problem in that many different schemes are presently in use for the coding and decoding of video material with differing devices having differing technical capabilities. Thus, if the additional material to be added to the requested video has been processed using techniques that differ from those adopted for the original material, a noticeable glitch may be present as the material switches from that added to or from the original source. Furthermore, in extreme cases, the playing of the video clip may cause equipment failure or alternatively after the material has been added, it is possible that the material is not playable at all.

According to a first aspect of the present invention, there is provided an apparatus of the aforesaid type, as set out in claim 1.

According to a second aspect of the present invention, there is provided a method of the aforesaid type, as set out in claim 7.

The invention will now be described by way of example only, with reference to the accompanying drawings, of which:
Figure 1 shows an environment for the supply of video data to mobile devices;
Figure 2 illustrates a protocol diagram for operations performed within the environment of Figure 1;
Figure 3 shows a video processing station of the type identified in Figure 1;
Figure 4 shows a preferred implementation for the processing system identified in Figure 3;
Figure 5 shows an alternative embodiment for the processing system identified in Figure 3;
Figure 6 shows an example of procedures for analysing the type of video asset received;
Figure 7 illustrates operations performed by the processing system identified in Figure 3; and

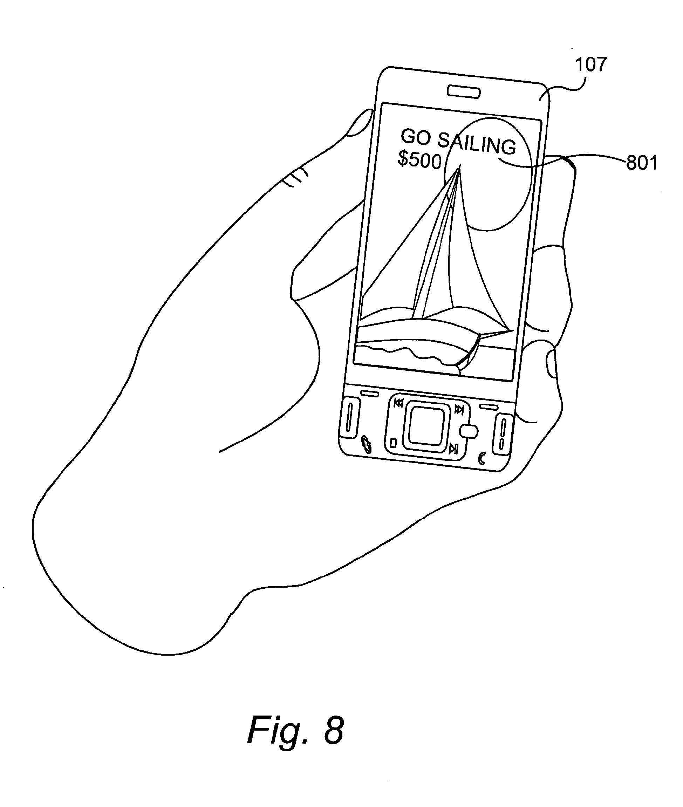

Figure 8 shows data displayed on a mobile device, in response to a user selecting encoded video data using procedures identified in Figure 7.

### Figure 1

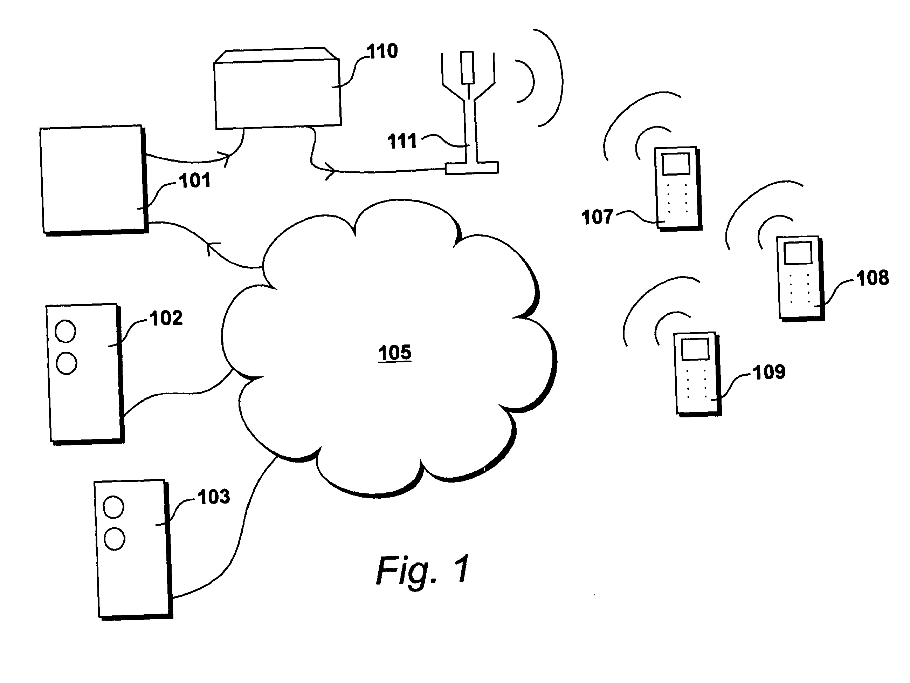

An environment for the supply of video data to mobile devices is illustrated in Figure 1. The environment includes a video processing station 101 arranged to receive video material from video material suppliers 102, 103 via the Internet 105.

Mobile devices 107, 108 and 109, including high specification mobile cellular telephones, are configured to request video material from suppliers 102, 103 via the video processing station 101. Thus, the video processing station 101 communicates with mobile devices 107 to 109 via a mobile cellular service provider 110 having a network of cellular base stations 111.

### Figure 2

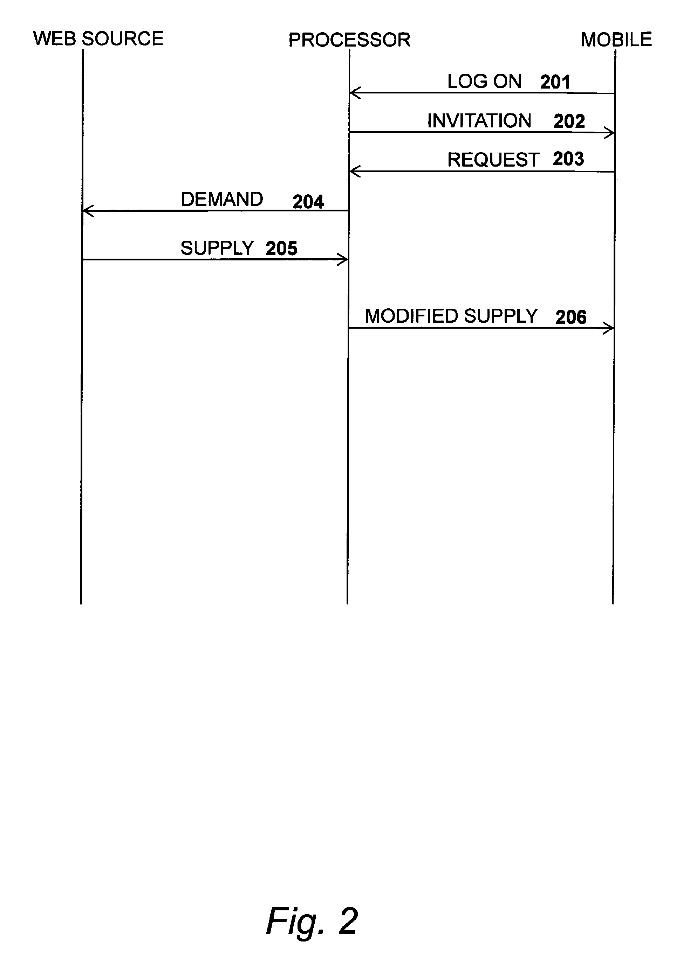

A protocol diagram illustrating operations performed within the environment of Figure 1 is illustrated in Figure 2.

At 201 a user using a mobile device, such as mobile device 107, logs on to the service provided by the processing station 101.

In response to this log-on operation, an invitation 202 is returned to the mobile device and in response to receiving this invitation the mobile device issues a request 203 for a specific video source.

At the processing station 101, a determination is made as to whether the request can be satisfied from previously stored material. However, assuming this is not possible, a demand 204 is made to the video source and original video material is supplied 205 back to the processing station 101.

At the processing station 101, the video material is modified to include additional material, such as advertisements. The modified supply 206 is then supplied to the requesting mobile device 107.

The material received from the video source could have been supplied directly to the requesting mobile telephone given that it has been stored in a format compatible with the radio network (110, 111) and the capabilities of the mobile device 107. Consequently, this video material will be in an encoded and compressed form (MPEG 4 for example). Consequently, difficulties arise in terms of adding material to the beginning of the video clip and/or adding material to the end of the video clip. This additional material could include advertisements, parental warnings, health warnings or any other information.

### Figure 3

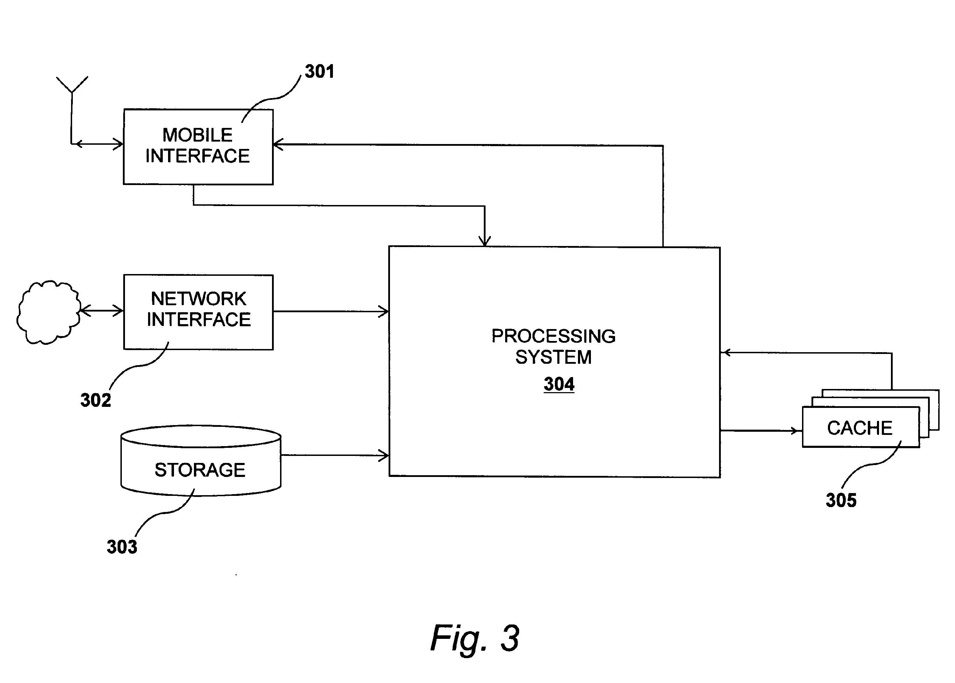

Video processing station 101 is detailed in Figure 3. The processing station includes a first interface 301 for receiving a request from the mobile device for video data and for returning modified video data back to the requesting mobile device. The processing station also includes a second interface 302 for requesting and receiving original video data from the video sources 102, 103.

A storage device 303 is arranged to store additional video data in a local native format which in itself would not be compatible with any of the CODECs used on the mobile devices 107 to 109. A processing system 304 is configured to perform manipulations upon the data stored in storage 303 and to effect a combining process so that video data files may be modified so as to contain additional data, usually at the start of the clip and at the end of the clip. In addition, modified assets of this type are also written to a cache 305 such that multiple requests for the same modified data may be satisfied quickly without repeating the processing and combining operations.

### Figure 4

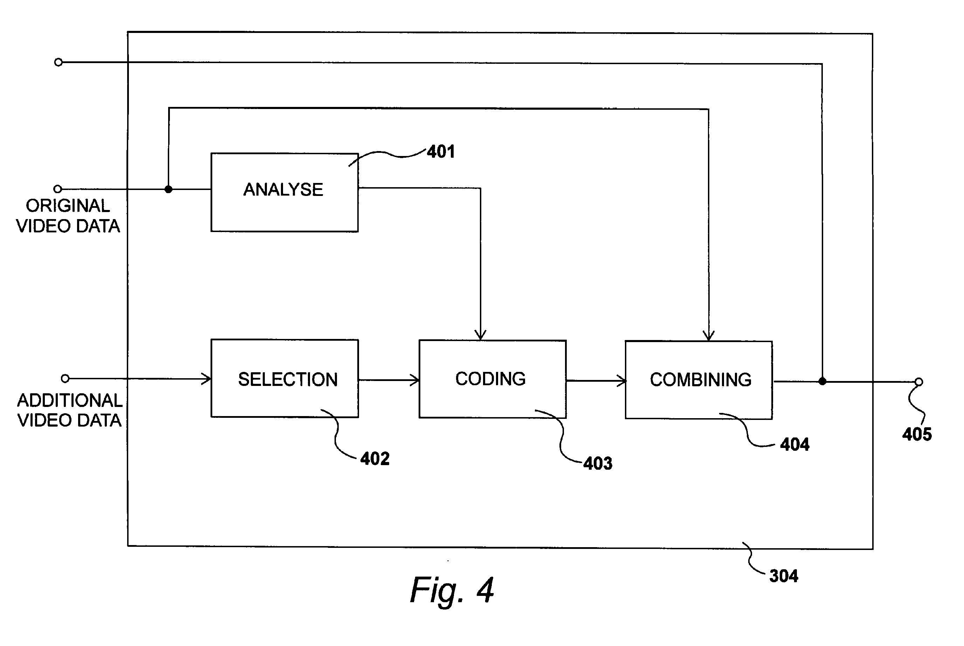

A preferred implementation for processing system 304 is identified in Figure 4. As previously described, the apparatus, in a preferred embodiment, supplies video data to mobile devices from a plurality of video material suppliers. The video processing station includes a first interface for receiving a request from a mobile device for video data and a second interface for requesting and receiving original video data. A data store is arranged to store additional video data and the operations of these devices are responsive to a processing system 304.

In a preferred embodiment, as illustrated in Figure 4, the processing system 304 includes an analysis sub-system 401 for analysing original coding characteristics of original video data received via the second interface. The processing system also includes a selection sub-system 402 for selecting additional data read from storage device 303. In a preferred embodiment, storage device 303 is implemented as a plurality of disc drives but it should be appreciated that other forms of storage could provide an appropriate data store.

A coding sub-system 403 codes the additional video data in accordance with the original coding characteristics as received from the analysis sub-system 401. A combining sub-system 404 combines the coded additional data from coding sub-system 403 with the original video data to produce combined video output data at 405.

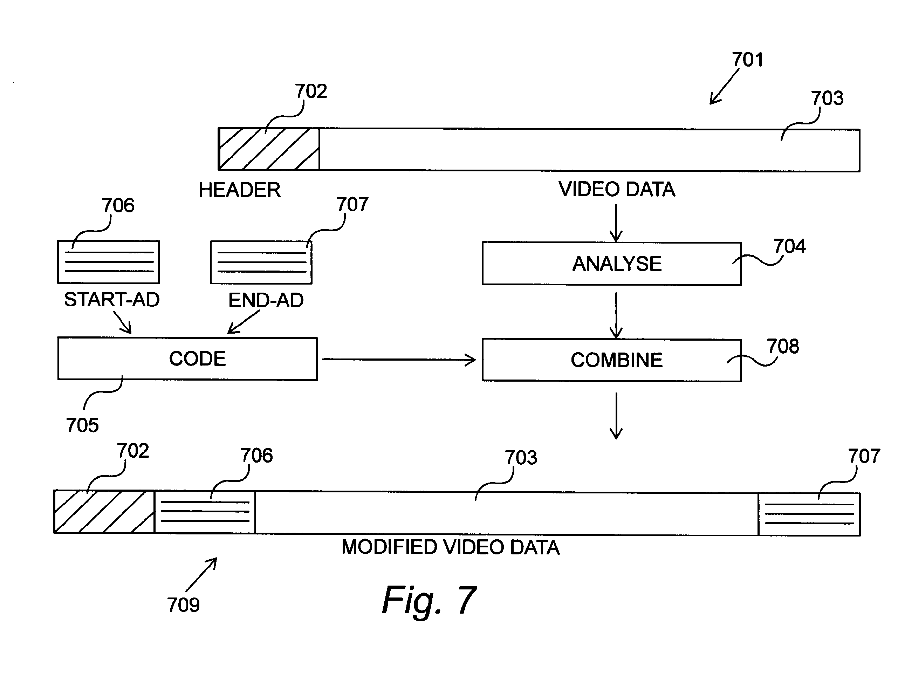

In operation, the analysis sub-system 401 effectively identifies a particular coding and decoding process, generally referred to in the art as a CODEC. In addition and where appropriate, the analysis sub-system also identifies a specific profile for the identified CODEC. Typically, this profile defines sample rates and sample definitions. Preferably, the analysis sub-system also identifies any headers present at the start of the original data file. In a preferred embodiment, the combining sub-system 404 combines coded data between the header and the original video data, as detailed with respect to Figure 7.

Thus, it can be seen from Figure 4 that the original video data is received at the processing system and supplied in parallel to the analysis sub-system 401 and to the combining sub-system 404. The analysis sub-system 401 identifies the type of CODEC used to code the original video data along with any other parameters associated with the CODEC, generally referred to as the profile of the CODEC.

The additional data, that is video data to be placed at the front of the original video data and/or at the end of the original video data is coded by the coding sub-system 403 so as to produce coded additional data that has technical characteristics substantially similar to the original video data. Thus, video data produced by the coding sub-system 403 appears as if it has been coded in substantially the same way as original video data received from the network interface 302. Thus, with the original video data and the additional video data now having substantially similar attributes, it is possible for an editing process to be performed by the combining sub-system 404 to produce the combined video output data.

### Figure 5

In an alternative embodiment, processing system 304 may be implemented as a programmable device programmed to perform procedures to effect an equivalent result to that produced by the embodiment detailed in Figure 4.

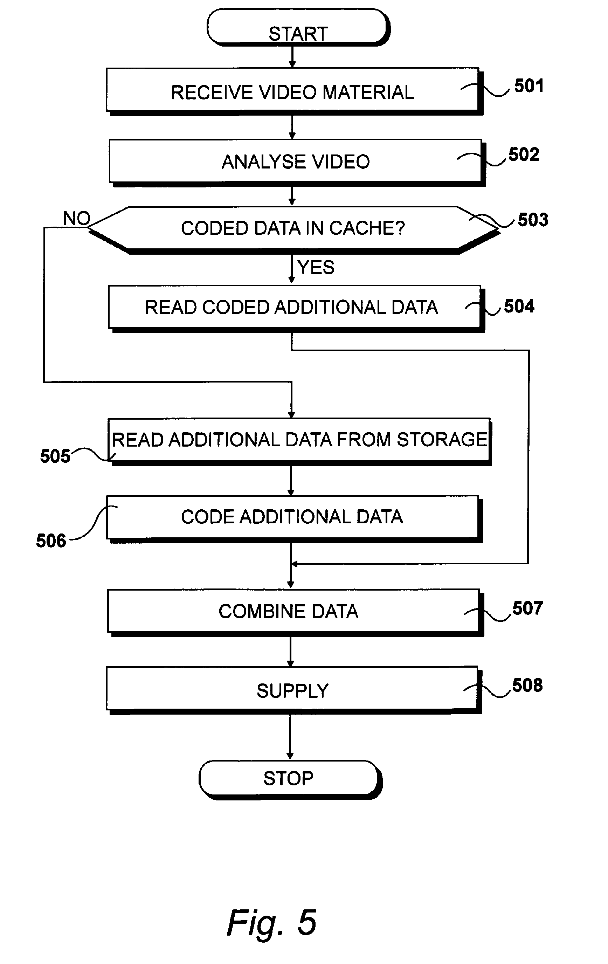

Procedures performed by processing system 304, in an alternative embodiment, are detailed in Figure 5.

At step 501 the video material is received and at step 502 an analysis is made as to the nature of that received video. The overall method, within the environment illustrated in Figure 1, provides for the supplying of the video data to the mobile devices in response to a request for video data received from a mobile device. The original video data is received in a form that is compatible for the operational characteristics of the requesting mobile device and it is this material that is analysed at step 502. Thus, the video data is relayed to the requesting mobile device by firstly analysing the coding characteristics of the original video data. Additional data is selected from storage although in a preferred embodiment, as illustrated in figure 5, a question may be asked at step 503 as to whether coded data already exists in cache 305. If this question can be answered in the affirmative, the coded additional data is read at step 504. Alternatively, the question asked at step 503 is answered in the negative and the additional data is read from storage at step 505.

When additional data has been read from storage at step 505, the additional data is coded at step 506. Thus, the coding is performed in accordance with the coding characteristics to produce coded data. Alternatively, this coded data is read from cache.

At step 507, the coded data is combined with the original data to produce combined data. This combined data is then supplied to the requesting mobile at step 508.

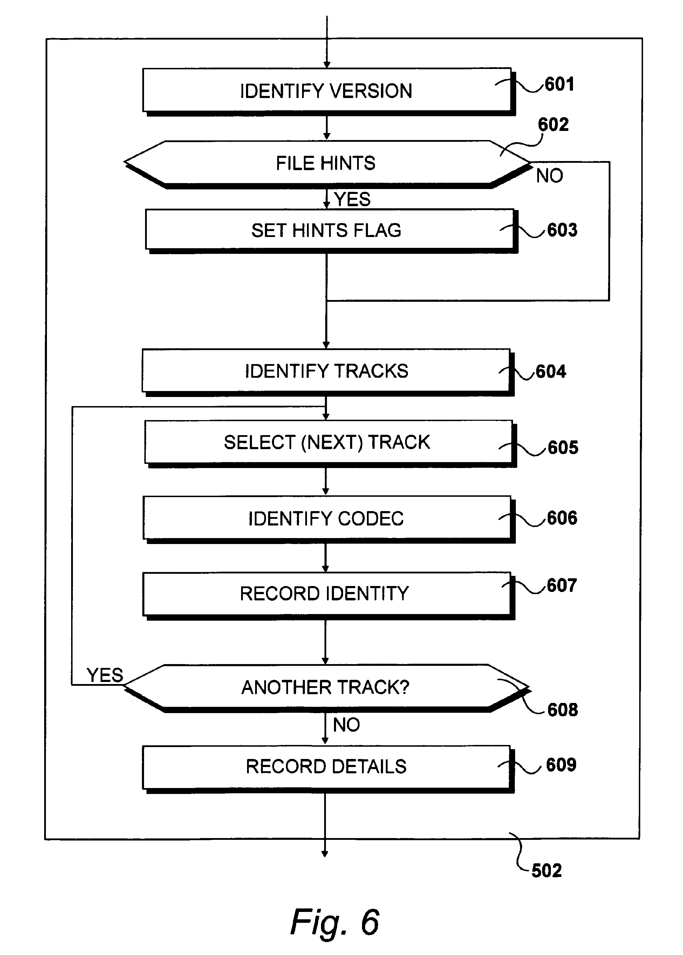

Analysis procedures performed at step 502 are substantially similar to procedures performed by the analysis sub-system 401 and are detailed in Figure 6.

### Figure 6

An example of procedures for analysing the type of video asset received via the network interface is detailed in Figure 6. Video files often take the form of a container within which there are a plurality of boxes or atoms arranged in a tree-like structure. These containers have advanced as various versions have been released therefore at step 601 the version of the container is identified.

Some containers contain hints to assist when streaming video data thus at step 602 a question is asked as to whether the file contains hints and when answered in the affirmative a hints flag is set at step 503 such that coded additional video data may also include these hints, where appropriate.

At step 604 tracks are identified and at step 605 a track is selected. For the selected track, the particular CODEC used is identified at step 606 and a record of this identified CODEC is made at step 607. Several CODEC types are currently available and new CODEC types are continually under development. Thus, for example, the CODEC may be identified as MPEG 4, H261, H263, AAC or IAPC for example but it should be appreciated that this does not represent an exhaustive list. At step 608 a question is asked as to whether another track is to be processed and when answered in the affirmative, control is returned to step 605.

In addition to identifying the CODEC type, for each video track it is necessary to identify the width and the height of the video material and some specifications, such as H264 and MPEG 4 will include a profile definition. The profile does not actually change the decoding process but it does provide an indication of the type of material to come. Other CODEC identification parameters concern the size of the decoding buffer and the bit rate.

In addition to analysing the video material, the audio material is also analysed therefore similar procedures must be performed upon the audio tracks, hence the requirement at step 608 to consider other tracks. For sound channels this is necessary to identify whether there is one mono track or two stereo tracks and it is also necessary to identify the sample rate which typically lies between 8kHz and 48kHz.

### Figure 7

An illustration of operations performed by processing system 304 are shown diagrammatically in Figure 7. In this example, an original video clip 701 includes a header 702 and video data 703. The video clip 701 is analysed, as illustrated by 704 which firstly identifies the existence of header 702 allowing the header to be separated from the video data 703. The analysis procedure 704 also identifies the type of coding that has been performed upon the video data 703. A coding process 705 receives additional video data (in its native format) which in this example represents an advertisement 706 to be placed at the beginning of the clip and an advertisement 707 to be placed at the end of the clip. Consequently, following analysis procedure 704, additional material 706 and 707 are coded by coding process 705 such that the additional material resembles the original video data 703. That is to say, from the perspective of an independent viewer, the original video data 703 and the additional data 706, 707 would appear to have been coded by the same CODEC.

Thus, as illustrated by process 708, the material is combined to produce modified video data 709. The modified data 709 starts with header 702, followed by coded start material 706, followed by the original video data 703 and finally followed by the coded end data 707.

### Figure 8

Using the procedures illustrated in Figure 7, it is possible for a user to select encoded video data and for the data to be displayed on mobile device 107. However, in a manner that appears completely seamless to the viewer, the viewer is presented with an advertisement 801 before being in a position to view the selected material. This additional material will appear to be of substantially similar quality to the selected material, it will not require a different CODEC and no noticeable joins will be displayed. However, from the distribution perspective, the addition of this advertising material (or other material) has been achieved without recoding the whole video clip and performing sophisticated editing and recoding procedures.

## Claims

1. A video processing apparatus (101) for supplying video data from a plurality of video material suppliers (102, 103) to a plurality of mobile devices (107 - 109) configured to request video material from said video material suppliers via said video processing station, **characterised in that** said video processing apparatus comprises:
a first interface (301) for receiving a request from a mobile device for video data;
a second interface (302) for requesting and receiving original video data;
a data store (303) arranged to store additional video data; and
a processing system (304), said processing system having:
an analysis sub-system (401) for analysing original coding characteristics of original video data received via said second interface (302);
a selection sub-system (402) for selecting additional video data from said data store (303);
a coding sub-system (403) for coding said additional video data in accordance with said original coding characteristics to produce coded additional data, and
a combining sub-system (404) for combining said coded additional data with the original video data, to produce combined video output data.

2. Apparatus according to claim 1, **characterised in that** said analysis sub-system (401) identifies a particular coding and decoding CODEC.

3. Apparatus according to claim 2, **characterised in that** said analysis sub-system (401) identifies a specific profile for the identified CODEC.

4. Apparatus according to claim 2, **characterised in that** said profile defines sample rates and sample definitions.

5. Apparatus according to claim 1, **characterised in that** said analysis sub-system (401) identifies a header before the start of video data.

6. Apparatus according to claim 5, **characterised in that** coded data is combined between said header and the original video data.

7. A method of supplying video data to mobile devices, comprising the steps of:
receiving (203) a request for video data;
accepting (205) a supply of original video data in a form compatible with operational characteristics of the requesting mobile device; and
relaying (206) a modified supply video data to the requesting mobile device, **characterised by**:
analysing (502) the original video data to determine the coding characteristics of said original video data;
reading (504) additional video data from storage;
coding (506) said additional video data in accordance with said coding characteristics to produce coded video data;
combining (708) said coded video data with said original video data to produce combined video data; and
supplying said combined data in response to said request.

8. A method according to claim 7, **characterised in that** said request for video data is received from a mobile cellular telephone (107).

9. A method according to claim 7 or claim 8, **characterised in that** said analysing step identifies a particular coding and decoding CODEC.

10. A method according to claim 9, **characterised in that** said analysing step identifies a specific profile for the identified CODEC.

11. A method according to claim 10, **characterised in that** said profile defines sample rates and sample definitions.

12. A method according to claim 7, **characterised in that** said analysing step identifies a header (702) before the start of the original video data.

13. A method according to claim 12, **characterised in that** said combining step combines said coded data (705) between the identified header (702) and the original video data (703).

14. A method according to any of claims 7 to 12, **characterised in that** the coded video data (706) is placed at the start of the original video data and/or the coded video data (707) is placed at the end of the video data.

15. A method according to any of claims 7 to 14, **characterised in that** said coded data conveys advertising material.
